# EUROPÄISCHE PATENTSCHRIFT

(11) **EP 1 898 101 B1**
(45) Veröffentlichungstag und Bekanntmachung des Hinweises auf die Patenterteilung: **21.12.2011**
(21) Anmeldenummer: 07114815.9
(22) Anmeldetag: 23.08.2007
(51) Int. Cl.: F15B 1/02

(54) **Verfahren zum Betätigen einer Hydraulikspeichereinrichtung einer Getriebeeinrichtung**
Method for actuating the hydraulic storage device for a geared device
Procédé d'actionnement d'un dispositif de stockage hydraulique d'un dispositif d'engrenage

(30) Priorität: 07.09.2006 DE 102006041899
(43) Veröffentlichungstag der Anmeldung: 12.03.2008
(73) Patentinhaber: ZF Friedrichshafen AG, 88038 Friedrichshafen (DE)
(72) Erfinder: Schiele, Peter, 88079 Kressbronn (DE); Steinhauser, Klaus, 88079 Kressbronn (DE); Thiele, Armin, 88069 Tettnang (DE)

(56) Entgegenhaltungen:
- EP-A- 1 353 075
- WO-A-2007/118500
- DE-A1- 4 135 424
- DE-A1- 4 323 133
- DE-B- 1 049 624

## Beschreibung

Die Erfindung betrifft ein Verfahren zum Betätigen einer Hydraulikspeichereinrichtung einer Getriebeeinrichtung gemäß der im Oberbegriff des Patentanspruches 1 näher definierten Art.

Aus der EP 1353075-A2 ist eine Vorrichtung zum Speichern von Hydraulikfluid eines Hydrauliksystems einer Getriebeeinrichtung sowie ein Verfahren zum Betreiben einer derartigen Vorrichtung bekannt. Dabei ist die Vorrichtung zum Speichern von Hydraulikfluid mit wenigstens einem von einer Gehäuseeinrichtung und einer Begrenzungseinrichtung begrenzten und mit einem Hydrauliksystem zum Austausch von Hydraulikfluid in Wirkverbindung bringbaren Speicherraum ausgebildet, dessen Volumen in Abhängigkeit eines Betriebszustandes der Begrenzungseinrichtung und/oder der Gehäuseeinrichtung zwischen einem Minimum und einem Maximum variierbar ist. Die Begrenzungseinrichtung und/oder die Gehäuseeinrichtung sind von einer Halteeinrichtung wenigstens in dem zu dem Maximum des Volumens des Speicherraumes äquivalenten Betriebszustand entgegen eines Rückstellbestrebens der Gehäuseeinrichtung und/oder der Begrenzungseinrichtung ausgehend von einem Betriebszustand, der von dem zu dem Minimum des Volumens des Speicherraumes äquivalenten Betriebszustand der Gehäuseeinrichtung und/oder der Begrenzungseinrichtung verschieden ist, in Richtung ihres zu dem Minimum des Volumens des Speicherraumes äquivalenten Betriebszustandes haltbar.

Damit ist ein zur Ansteuerung von Schaltelementen einer Getriebeeinrichtung vorgesehenes definiertes Hydraulikfluidvolumen drucklos im Speicherraum zwischenspeicherbar und betriebszustandsabhängig durch halteeinrichtungsseitige Freigabe der Begrenzungseinrichtung und/oder der Gehäuseeinrichtung aufgrund des Rückstellbestrebens der Gehäuseeinrichtung und/oder der Begrenzungseinrichtung in das Hydrauliksystem der Getriebeeinrichtung mit definiertem Druck einleitbar. Mit dem Verfahren zum Betreiben einer derartigen Vorrichtung in einem Fahrzeug mit wenigstens einer hydraulisch ansteuerbaren Baugruppe wird der Rastmechanismus der Halteeinrichtung bei Vorliegen einer Anforderung zum Führen des Hydraulikfluides aus dem Speicherraum in das Hydrauliksystem deaktiviert, um ein Schaltelement mit dem im Speicherraum der Vorrichtung zwischengespeicherten Hydraulikfluidvolumen betriebszustandsabhängig ansteuern zu können.

Nachteilig dabei ist jedoch, dass die Begrenzungseinrichtung und/oder die Gehäuseeinrichtung während verschiedener Betriebszustandsverläufe des Hydrauliksystems nicht in einen Betriebszustand überführbar sind, in welchem die Halteeinrichtung beziehungsweise der Rastmechanismus der Halteeinrichtung verrastet und die Begrenzungseinrichtung und/oder die Gehäuseeinrichtung von der Halteeinrichtung nicht in dem aktuellen Betriebszustand entgegen dem Rückstellbestreben der Gehäuseeinrichtung und/oder der Begrenzungseinrichtung gehalten wird und das in der Vorrichtung beziehungsweise in dessen Speicherraum gespeicherte Hydraulikfluid aufgrund des Rückstellbestrebens unkontrolliert aus dem Speicherraum ausgeführt wird.

Der vorliegenden Erfindung liegt daher die Aufgabe zugrunde, ein Verfahren zum Betätigen einer Hydraulikspeichereinrichtung zur Verfügung zu stellen, mittels dem die Hydraulikspeichereinrichtung in einen Betriebszustand überführt wird, in dem die Halteeinrichtung aktiviert und die Hydraulikspeichereinrichtung entgegen dem Rückstellbestreben der Hydraulikspeichereinrichtung ausgehend von einem Betriebszustand, der von dem zu dem Minimum des Volumens äquivalenten Betriebszustand verschieden ist, in Richtung eines zu dem Minimum des Volumens des Speicherraumes äquivalenten Betriebszustandes haltbar ist.

Erfindungsgemäß wird diese Aufgabe mit einem Verfahren mit den Merkmalen des Patentanspruches 1 gelöst.

Bei dem erfindungsgemäßen Verfahren zum Betätigen einer Hydraulikspeichereinrichtung einer Getriebeeinrichtung mit einem Speicherraum, dessen Volumen zwischen einem Minimum und einem Maximum variierbar ist, ist das Volumen des Speicherraumes von seinem Minimum in sein Maximum durch Beaufschlagen des Speicherraumes mit unter Druck stehendem Hydraulikfluid einer Druckversorgung der Getriebeeinrichtung überführbar. Der Druck ist zum Überwinden eines Rückstellbestrebens der Hydraulikspeichereinrichtung ausgehend von einem Betriebszustand, der von dem zu dem Minimum des Volumens äquivalenten Betriebszustand verschieden ist, in Richtung eines zu dem Minimum des Volumens des Speicherraumes äquivalenten Betriebszustandes auf einen Schwellwert einzustellen. Zusätzlich ist eine Halteeinrichtung zum Halten der Hydraulikspeichereinrichtung wenigstens in dem zu dem Maximum des Volumens des Speicherraumes äquivalenten Betriebszustandes entgegen dem Rückstellbestreben vorgesehen.

Dabei wird der Speicherraum von der Druckversorgung solange zumindest mit einem dem Schwellwert entsprechenden Druckwert beaufschlagt, bis die Hydraulikspeichereinrichtung den Betriebszustand erreicht hat, in der sie von der Halteeinrichtung haltbar ist.

Das bedeutet, dass mit dem erfindungsgemäßen Verfahren ein Befülldruck des Speicherraumes derart verändert beziehungsweise eine Aktuatorik einer Getriebeeinrichtung derart angesteuert wird, dass eine Befüllung des Speicherraumes der Hydraulikspeichereinrichtung bis in eine rastierbare Endlage sichergestellt wird. Erfindungsgemäß ist der Druck der Druckversorgung der Hydraulikspeichereinrichtung dabei ausgehend von einem aktuellen Druckniveau derart anhebar oder absenkbar, dass zur Befüllung des Speicherraumes ein Druckpotenzial zur Verfügung steht, mittels welchem die Hydraulikspeichereinrichtung auf jeden Fall in einen Betriebszustand überführbar ist, in dem sie von der Halteeinrichtung haltbar ist, wobei die Befüllung des Speicherraumes vorzugsweise nach Ablauf eines vordefinierten Zeitraumes sichergestellt sein soll.

Bei dem erfindungsgemäßen Verfahren wird eine Veränderung des Druckes der Druckversorgung während eines Schubbetriebes eines mit der Getriebeeinrichtung ausgebildeten Antriebsstranges eines Fahrzeuges durchgeführt. Damit ist die Veränderung des Druckes der Druckversorgung strategiefähig ausgebildet und wird vorzugsweise während Ausrollvorgängen eines Fahrzeuges durchgeführt. Dabei ist von Vorteil, obwohl eine Erhöhung eines den Befülldruck der Hydraulikspeichereinrichtung darstellenden Drucks der Druckversorgung des Hydrauliksystems der Getriebeeinrichtung grundsätzlich zu einem erhöhten Getriebepumpenaufnahmemoment führt, da das erhöhte Getriebepumpenaufnahmemoment im Schubbetrieb nicht zu einem Kraftstoffmehrverbrauch einer Brennkraftmaschine des Antriebsstranges eines Fahrzeuges führt.

Bei dem erfindungsgemäßen Verfahren wird der Druck der Druckversorgung während eines Schaltvorganges in der Getriebeeinrichtung nicht verändert. Dadurch wird eine Beeinträchtigung von Schaltungen auf einfache Art und Weise vermieden und zusätzlich sichergestellt, dass von der Druckversorgung die zum Befüllen des Speicherraumes der Hydraulikspeichereinrichtung erforderlichen Hydraulikfluidvolumina zur Verfügung gestellt werden, ohne dadurch weitere Getriebefunktionalitäten zu beeinträchtigen.

Bei dem erfindungsgemäßen Verfahren wird eine Veränderung des Druckes der Druckversorgung zum Befüllen des Speicherraumes der Hydraulikspeichereinrichtung lediglich bei einer aktivierten Motor-Start-Stopp-Funktion zum Abschalten der Brennkraftmaschine durchgeführt. Damit werden unnötige Veränderungen des Druckes der Druckversorgung und somit eine unerwünschte Erhöhung eines Kraftstoffverbrauches vermieden beziehungsweise minimiert.

Bei einer vorteilhaften Variante des erfindungsgemäßen Verfahrens ist die Veränderung des Druckes der Druckversorgung zusätzlich zeitlich begrenzt oder wird bei Erreichen eines Betriebszustandes der Hydraulikspeichereinrichtung, zu dem diese entgegen dem Rückstellbestreben in dem Betriebszustand von der Halteeinrichtung gehalten wird, beendet.

Dabei wird die Veränderung des Druckes der Druckversorgung nach Ablauf eines vordefinierten Zeitraumes ausgehend vom Beginn der Veränderung des Druckes der Druckversorgung auf einen in Abhängigkeit eines aktuellen Betriebszustandes der Getriebeeinrichtung stehenden Druckwert eingestellt. Der vordefinierte Zeitraum ist vorzugsweise in Abhängigkeit wenigstens eines Betriebszustandsparameters eines Bauteiles des Antriebsstranges eines Fahrzeuges, wie einer Getriebeöltemperatur, einem Getriebesystemdruck, einer Motordrehzahl beziehungsweise einer Getriebepumpendrehzahl, in Abhängigkeit von Schnellfüllzeitadaptionswerten, Getriebebetriebsstunden, einer Getriebeverschleißindikation, einem aktuell geschalteten Übersetzungsverhältnis oder dergleichen, adaptierbar bzw. lernend veränderbar.

Zusätzlich oder alternativ hierzu ist es bei weiteren vorteilhaften Varianten des erfindungsgemäßen Verfahrens vorgesehen, dass der vordefinierte Zeitraum mittels eines einen Füllgrad des Speicherraumes abbildenden Befüllmodells bestimmt wird, wobei das Befüllmodell auf messtechnisch ermittelte Druckwerte der Druckversorgung sowie auf weitere Betriebszustandsparameter

verschiedener Bauteile eines Antriebsstranges eines Fahrzeuges zurückgreift und einen aktuellen Füllgrad des Speicherraumes theoretisch ermittelt.

Des Weiteren wird der vordefinierte Zeitraum bei einer weiteren vorteilhaften Variante des Verfahrens nach der Erfindung in Abhängigkeit von durch wenigstens eine Getriebefunktion bewirkte Veränderung des Druckes des Drucksystems adaptiert, um deren Funktionalität nicht zu beeinträchtigen und gegebenenfalls nicht erforderliche Veränderungen des Drucks der Druckversorgung zu vermeiden.

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel,
Es zeigt:
- Fig. 1: eine stark schematisierte Darstellung eines Fahrzeuges, welches mit einer Getriebeeinrichtung und einer erfindungsgemäßen Hyraulikspeichereinrichtung ausgebildet ist;
- Fig. 2: eine stark schematisierte Darstellung der Hyraulikspeichereinrichtung und
- Fig. 3: einen zeitlichen Verlauf des Druckes der Druckversorgung und einen Verlauf des Druckes im Speicherraum der Vorrichtung gemäß Fig. 1.

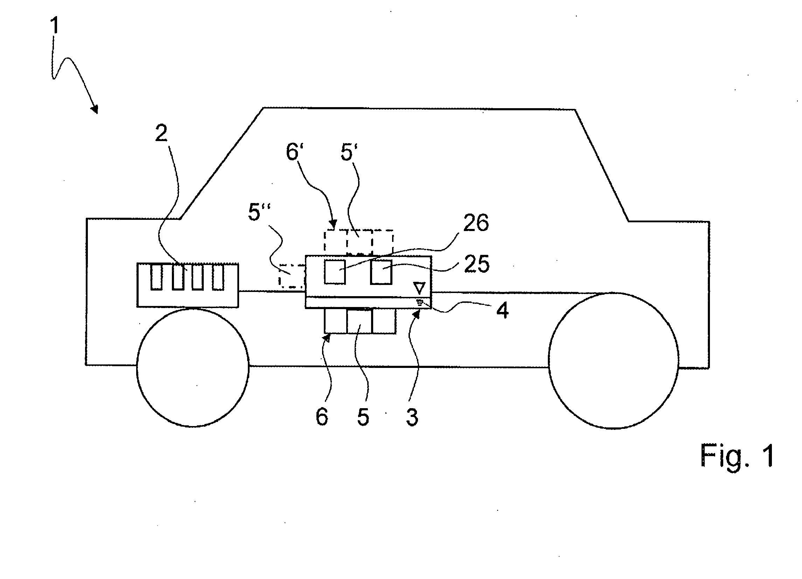

Fig. 1 zeigt eine stark schematisierte Darstellung eines Fahrzeuges 1, welches in an sich bekannter Art und Weise mit einer Verbrennungsmaschine 2 und einer Getriebeeinrichtung 3 ausgeführt ist. Die Getriebeeinrichtung 3 kann grundsätzlich jedes aus der Praxis bekannte automatisierte Handschaltgetriebe oder Automatgetriebe sein, welches mit hydraulisch ansteuerbaren Schaltelementen 25, 26, wie beispielsweise reibschlüssigen Lamellenkupplungen oder Lamellenbremsen ausgebildet ist.

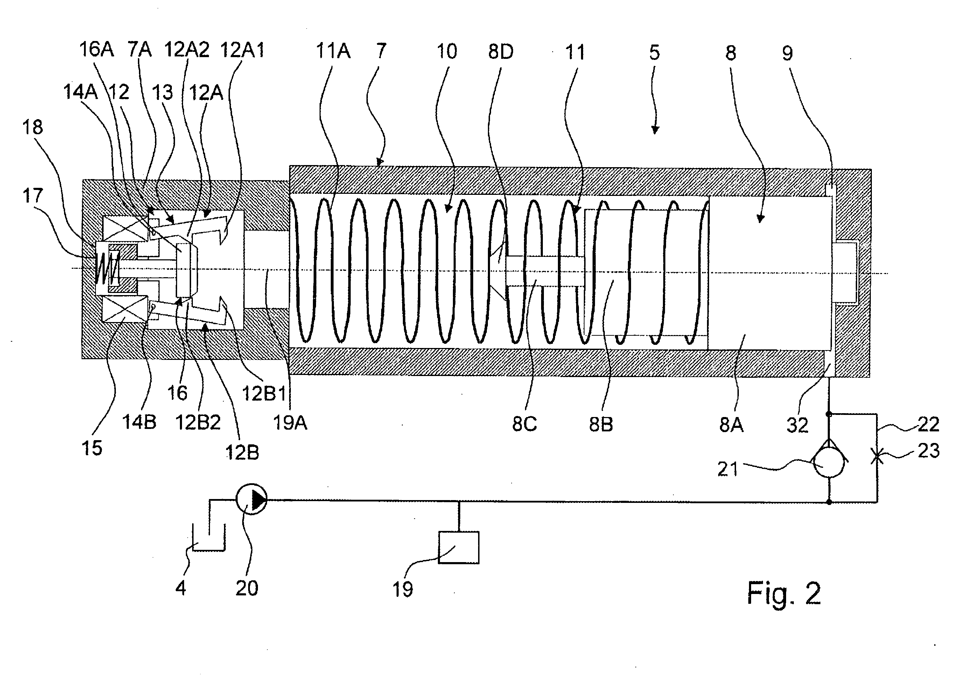

Die Getriebeeinrichtung 3 beziehungsweise das Fahrzeuggetriebe ist vorliegend mit einem in Fig. 2 stark schematisiert dargestellten Hydrauliksystem 19, einem Ölsumpf 4 und einer Hydraulikspeichereinrichtung 5 zum Speichern von Hydraulikfluid des Hydrauliksystems 19 der Getriebeeinrichtung 3 ausgebildet, wobei die Hydraulikspeichereinrichtung 5 in der in Fig. 1 dargestellten Art und Weise in einem hydraulischen Schaltgerät 6 des Fahrzeuggetriebes 3 angeordnet ist. Alternativ hierzu ist die Hydraulikspeichereinrichtung gemeinsam mit dem Schaltgerät auch oberhalb des Füllstandes des Ölsumpfes 4 anordenbar, wobei diese Anordnung der Hydraulikspeichereinrichtung und des Schaltgerätes jeweils unter den Bezugszeichen 5' beziehungsweise 6' in Fig. 1 näher dargestellt ist.

Wiederum alternativ hierzu ist die Hydraulikspeichereinrichtung auch an anderer Stelle außerhalb oder innerhalb der Getriebeeinrichtung 3 und räumlich von dem Schaltgerät 6 getrennt anordenbar, wobei eine der letztgenannten Anordnungsmöglichkeiten in Fig. 1 unter dem Bezugszeichen 5" näher gezeigt ist.

Für eine Verbrauchsoptimierung und eine Reduzierung von Schadstoffemissionen des Fahrzeuges 1 ist eine sogenannte Motor-Start-Stopp-Funktion vorgesehen, mittels welcher die Verbrennungsmaschine 2 in vordefinierten Betriebszuständen des Fahrzeuges 1 abgeschaltet wird und bei Vorliegen eines oder mehrerer vordefinierter Startkriterien wieder gestartet wird.

So wird die Verbrennungsmaschine 2 beispielsweise bei aktiviertem Bremslicht und im Fahrzeugstillstand und/oder bei fahrerseitig betätigtem Bremspedal des Fahrzeugbetriebsbremssystems selbst während sehr kurzer Stillstandsphasen des Fahrzeuges bei Vorliegen einer Wählhebelposition "D" für Vorwärtsfahrt abgeschaltet und bei Vorliegen verschiedener Startkriterien, wie beispielsweise bei Unterschreiten einer Bremsdruckschwelle, bei einem Lösen der Fahrzeugbremse, bei deaktiviertem Bremslicht, bei einer fahrseitigen Wählhebelbetätigung in eine Position, in der ein Start der Verbrennungsmaschine 2 angefordert wird, bei einer Betätigung des Gaspedals größer oder kleiner als ein Schwellwert, bei einer steuersystemseitigen Ankündigung eines Startvorganges der Verbrennungsmaschine, bei Vorliegen einer Abtriebsdrehzahl größer oder kleiner eines Schwellwertes, bei Vorliegen einer vordefinierten Ladebilanz eines elektrischen Speichers des Fahrzeuges oder in Abhängigkeit von Komfortkriterien, wie eine Anforderung zur Klimatisierung der Fahrgastzelle, wieder gestartet.

Die der Getriebeeinrichtung 3 zugeordnete Hydraulikspeichereinrichtung 5 ist in einer stark schematisierten Längsschnitteinzelansicht in Fig. 2 gezeigt. Die Hydraulikspeichereinrichtung 5 ist mit einem Zylinder 7 und einem zwischen zwei Endstellungen längsverschieblich in dem Zylinder 7 angeordneten Kolben 8 ausgebildet. Der Zylinder 7 und der Kolben 8 begrenzen einen mit dem Hydrauliksystem 19 der Getriebeeinrichtung 3 verbundenen Speicherraum 9, dessen Volumen in Abhängigkeit eines Betriebszustandes der Hydraulikspeichereinrichtung beziehungsweise einer Stellung des Kolbens 8 in dem Zylinder 7 zwischen einem Minimum und einem Maximum variierbar ist. Das Volumen des Speicherraumes 9 wird während einer Bewegung des Kolbens 8 in Richtung seiner ersten Endstellung verkleinert und während einer Bewegung in Richtung seiner zweiten Endstellung vergrößert. Des Weiteren begrenzen der Kolben 8 und der Zylinder 7 im Inneren des Zylinders 7 auf der dem Speicherraum 9 abgewandten Seite des Kolbens 8 einen Raum 10, in welchem eine Federeinrichtung 11 angeordnet ist.

Die Federeinrichtung 11 umfasst vorliegend ein als Schraubenfeder ausgeführtes Federelement 11A, welches einenends an der dem Speicherraum 9 abgewandten Stirnfläche des Kolbens 8 und anderenends an einer Stirnfläche eines Gehäuseteiles 7A des Zylinders 7 anliegt und im Betrieb der Hydraulikspeichereinrichtung 5 als Druckfeder wirkt.

In dem Gehäuseteil 7A ist eine Halteeinrichtung 12 angeordnet, mittels welcher der Kolben 8 in dem zu dem Maximum des Volumens des Speicherraumes 9, d. h. in der zweiten Endstellung des Kolbens 8, entgegen eines Rückstellbestrebens des Kolbens 8 ausgehend von einem Betriebszustand, der von dem zu dem Minimum des Volumens des Speicherraumes 9 äquivalenten Betriebszustand des Kolbens 8 verschieden ist, in Richtung des zu dem Minimum des Volumens des Speicherraumes 9 äquivalenten Betriebszustandes des Kolbens 8 haltbar ist. Das Rückstellbestreben des Kolbens 8 wird bei dem in Fig. 2 dargestellten Ausführungsbeispiel der Hydraulikspeichereinrichtung 5 durch die mit dem Kolben 8 und dem Zylinder 7 beziehungsweise dem Gehäuseteil 7A zusammenwirkenden Federeinrichtung 11 zur Verfügung gestellt,

Der Kolben 8 ist im Bereich seiner dem Raum zugewandten Seite mit einem gegenüber einem Führungsbereich 8A, dessen Außendurchmesser prinzipiell dem Innendurchmesser des Zylinders 7 entspricht, mit einem gegenüber dem Führungsbereich 8A reduzierten Außendurchmesser ausgeführten Kolbenbereich 8B ausgebildet, an den sich wiederum ein Bolzenelement 8C anschließt. In seinem dem Kolbenbereich 8B abgewandten Endbereich ist das Bolzenelement 8C hutartig mit einem Kegelstumpfbereich 8D ausgebildet, wobei die Kegelfläche des Kegelstumpfbereiches 8D der Halteeinrichtung 12 zugewandt ist und in der nachbeschriebenen Art und Weise bei einer Bewegung des Kolbens 8 ausgehend von seiner ersten Endstellung in Richtung seiner zweiten Endstellung zur Vermeidung von Klemmen mit Führungsschrägen mehrerer Rastelemente 12A, 12B der Halteeinrichtung 12 entsprechend zusammenwirkt.

Ein Außendurchmesser der Federeinrichtung 11A ist vorliegend kleiner als ein Innendurchmesser des Zylinders 7, so dass bei einem Stauchen des Federelementes 11A ein Aneinanderreihen zwischen dem Federelement 11A und dem Zylinder 7 sicher vermieden ist. Des Weiteren sind ein Innendurchmesser des Federelementes 11A und ein Außendurchmesser des Kolbenbereiches 8B des Kolbens 8 derart aufeinander abgestimmt, dass eine Mantelfläche des Kolbenbereiches 8B eine Führungs- und Stützfläche für das Federelement 11A ausbildet und ein unerwünschtes Ausbeulen des Federelementes 11 A in seinem stärksten Stauchzustand sicher vermieden ist. Damit wird ein Klemmen zwischen dem Federelement 11A und dem Zylinder 7 unterbunden und eine einwandfreie Funktionsweise der Hydraulikspeichereinrichtung 5 gewährleistet.

Zusätzlich ist eine axiale Länge des Kolbenbereiches 8B derart ausgeführt, dass ein maximales Stauchmaß des Federelementes 11A nicht überschritten wird und eine plastische Verformung des Federelementes 11A, welche das Betriebsverhalten der Hydraulikspeichereinrichtung 5 nachteilig beeinflussen würde, vermieden ist.

Die Halteeinrichtung 12 umfasst vorliegend einen Rastmechanismus 13, der im Wesentlichen die einenends um gehäusefeste Drehpunkte 14A und 14B drehbar ausgeführten und anderenends jeweils mit mit dem Kegelstumpfbereich 8D zur Vermeidung von Klemmen zusammenwirkenden korrespondierenden Führungsschrägen 12A1 und 12B1 ausgebildeten Rastelemente 12A und 12B aufweist.

Zusätzlich umfasst der Rastmechanismus 13 auch einen die Halteinrichtung 12 in stromlosem Zustand eines elektromagnetischen Aktors 15 deaktivierenden Betätigungsstößel 16, der im Bereich seines dem Kolben 8 abgewandten Endes von einer weiteren Federeinrichtung 17 in Richtung einer die Halteeinrichtung 12 deaktivierenden Stellung angefedert ist und in bestromtem Zustand des elektromagnetischen Aktors 15 entgegen der Federkraft der weiteren Federeinrichtung 17 mit seiner dem Kolben 8 abgewandten Seite gegen einen Anschlagbereich 18 des Gehäuseteiles 7A gedrückt ist. In der letztgenannten Stellung des Betätigungsstößels 16 ist dieser mit einem Kopfbereich 16A aus einem Wirkbereich geführt, in dem der Betätigungsstößel 16 mit seinem Kopfbereich 16A mit weiteren Führungsschrägen 12A2 und 12B2 der Rastelemente 12A, 12B zusammenwirkt und die Rastelemente 12A und 12B in der in Fig. 2 dargestellten Art und Weise um die Drehpunkte 14A und 14B in Bezug auf eine Rotationsachse 19 der Hydraulikspeichereinrichtung 5 radial nach außen verschwenkt, so dass keine Überdeckung zwischen den Rastelementen 12A und 128 und dem Kegelstumpfbereich 8D gegeben ist.

Der bestromte Zustand des elektromagnetischen Aktors 15 sowie der aktivierte Zustand der Halteeinrichtung 12 sind in der Zeichnung nicht näher dargestellt, wobei die Rastelemente 12A und 12B in der zweiten Endstellung des Kolbens 8 mit ihren Führungsschrägen 12A1 und 12B1 hinter dem Kegelstumpfbereich 8D einfallen. Bei einer Bewegung des Kolbens 8 in Richtung seiner ersten Endstellung kommen die Rastelemente 12A und 12B an der dem Betätigungsstößel 16 abgewandten rückseitigen Stirnfläche des Kegelstumpfbereiches 8D zum Anliegen und halten den Kolben 8 in einem zu dem Maximum des Volumens des Speicherraumes 9 äquivalenten Betriebszustand entgegen des Rückstellbestrebens des Kolbens 8 beziehungsweise der Federeinrichtung 11 in seiner zweiten Endstellung.

Der Speicherraum 9 ist vorliegend sowohl mit dem Hydrauliksystem 19 der Getriebeeinrichtung 3 als auch mit einer Getriebepumpe 20 der Getriebeeinrichtung 3 verbunden, wobei vorliegend zwischen dem Speicherraum 9 und dem Hydrauliksystem 19 beziehungsweise der Getriebepumpe 20 optional ein in Befüllrichtung des Speicherraumes 9 sperrendes Rückschlagventil 21 und eine das Rückschlagventil 21 umgehende Bypassleitung 22 vorgesehen ist, welche mit einer Drosseleinrichtung 23 ausgeführt ist.

Ausgehend von dem in Fig. 2 dargestellten Zustand der Hydraulikspeichereinrichtung 5, zu weichem sich der Kolben 8 in seiner ersten Endstellung befindet, die einen zu dem Minimum des Volumens des Speicherraumes 9 äquivalenten Betriebszustand der Hydraulikspeichereinrichtung 5 darstellt, wird die Hydraulikspeichereinrichtung 5 beziehungsweise dessen Speicherraum 9 bei entsprechendem Fördervolumen der Getriebepumpe 20 entgegen der Federkraft der Federeinrichtung 11 über die Bypassleitung 22 und die Drosseleinrichtung 23 befüllt, wobei der Kolben 8 in seiner zweiten Endstellung, im Bereich einer der Halteeinrichtung 12 zugewandten Stirnfläche des Kolbenbereiches 8B an dem Gehäuseteil 7A zum Anliegen kommt. In dieser Stellung des Kolbens 8 sind die einander zugewandten Flächen der Rastelemente 12A und 12B und des Kegelstumpfbereiches 8D zueinander beabstandet, da eine Länge des Bolzenelementes 8C zur Reduzierung von während der Herstellung der einzelnen Bauteile der Hydraulikspeichereinrichtung 5 zu berücksichtigenden Festigungstoleranzen größer als für eine Aktivierung der Halteeinrichtung 12 ist und eine sichere Aktivierung der Halteeinrichtung 12 gewährleistet ist.

Sinkt der hydraulische Druck im Speicherraum 9 aufgrund der aktivierten Motor-Start-Stopp-Funktion bei abgeschalteter Verbrennungsmaschine 2 und nicht mehr fördernder Getriebepumpe 20 ab, wird der Kolben 8 ab unterschreiten eines Druckwertes von der Federeinrichtung 11 in Richtung seiner ersten Endstellung verschoben, bis die einander zugewandten Stirnflächen des Kegelstumpfbereichs 8D und der Rastelemente 12A und 12B zum Anliegen kommen.

Mittels des Rückschlagventiles 21 und der Drosseleinrichtung 23 in der Bypassleitung 22 besteht auf einfache Art und Weise die Möglichkeit, die Hydraulikspeichereinrichtung 5 von der fördernden Getriebepumpe 20 über eine Systemdruck führende Hydraulikleitung des Hydrauliksystems 19 der Getriebeeinrichtung 3, der beispielsweise 15 bar und höher sein kann, gedämpft zu versorgen. Dadurch sind die Bauteile der Hydraulikspeichereinrichtung 5 lediglich für einen über die Drosseleinrichtung 23 einstellbaren und entsprechend geringeren Befülldruck auszulegen.

Die Drosseleinrichtung 23 bewirkt zusätzlich, dass der Systemdruck des Hydrauliksystems 19 während der Befüllung der Hydraulikspeichereinrichtung 5 aufgrund der durch die Drosseleinrichtung 23 verzögerten Bewegung des Kolbens 8 während der Befüllung der Hydraulikspeichereinrichtung 5 nicht in einem die Funktionsweise der Getriebeeinrichtung 3 negativ beeinflussenden Umfang verändert wird.

Ist der Speicherraum 9 vollständig befüllt und wird die Verbrennungsmaschine 2 von der Motor-Start-Stopp-Funktion abgeschaltet, wird der Kolben 8 von der Halteeinrichtung 12 wenigstens annähernd in seiner zweiten Endstellung gehalten, Dabei fällt der im Speicherraum 9 während des Befüllvorganges des Speicherraumes 9 aufgebaute Fülldruck über das Rückschlagventil 21 bei entsprechendem positivem Druckgefälle zwischen dem Speicherraum 9 und dem Hydrauliksystem 19 ab und das im Speicherraum 9 gespeicherte Hydraulikfluidvolumen wird im Wesentlichen drucklos vorgehalten. Damit werden auf einfache und kostengünstige Art und Weise aufwendige Abdichtmaßnahmen des Speicherraumes 9 vermieden.

Um jedoch ein Leerlaufen des Speicherraumes 9 bei abgeschalteter Verbrennungsmaschine 2 und damit bei nicht fördernder Getriebepumpe 20 zu vermeiden, ist die Hydraufikspeichereinrichtung 5 auf einfache Art und Weise unterhalb des Füllstandes des Ölsumpfes 4 der Getriebeeinrichtung 3 anzuordnen, da der Speicherraum 9 dann ohne weitere konstruktive Maßnahmen aufgrund des hydrostatischen Druckes vollständig befüllt bleibt.

Ergeht eine steuersystemseitige Anforderung für einen Startvorgang der Verbrennungsmaschine 2 wird die Bestromung des elektromagnetischen Aktors 15 unterbrochen und der Betätigungsstößel 16 von der weiteren Federeinrichtung 17 in seine die Halteeinrichtung 12 deaktivierende Stellung, in der die Rastelemente 12A und 12B aus dem Eingriff mit dem Kegelstumpfbereich 8D des Kolbens 8 geführt werden, verschoben. Gleichzeitig wird der Kolben 8 von der Federeinrichtung 11 in Richtung seiner ersten Endstellung gedrückt und das im Speicherraum 9 gespeicherte Hydraulikfluid über das geöffnete Rückschlagventil 21, weiches nunmehr einen erheblich größeren Strömungsquerschnitt als die Drosseleinrichtung 23 freigibt in Richtung des Hydrauliksystems 19 geführt und eine Ansteuerung von Schaltelementen, wie Schaltkupplungen oder Schaltbremsen 25 und 26, der Getriebeeinrichtung 3 unterstützt.

Alternativ zu der direkten Anbindung der Hydraulikspeichereinrichtung 5 an eine systemdruckführende Leitung des Hydrauliksystems 19 der Getriebeeinrichtung 3 besteht auch die Möglichkeit, den Speicherraum 9 von einer anderen Druckversorgung, wie einer einen Reduzierdruck des Hydrauliksystems 19, der vorzugsweise 5 bis 5,5 bar entspricht, oder einer einen sekundären Systemdruck führenden Leitung, aus zu befüllen.

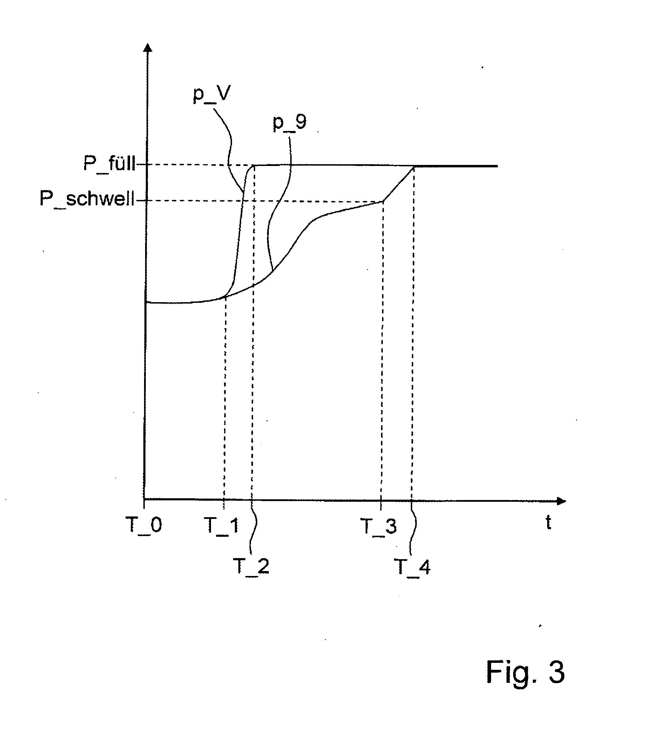

Fig. 3 zeigt ein Diagramm, in welchem ein Verlauf eines Drucks p_V einer Druckversorgung des Hydrauliksystems 19 der Getriebeeinrichtung 3 und ein Verlauf des Drucks p_9 im Speicherraum 9 der Hydraulikspeichereinrichtung 5 während eines Befüllvorganges der Hydraufikspeichereinrichtung 5 beziehungsweise des Speicherraumes 9 über der Zeit t dargestellt ist. Dabei weist der Speicherraum 9 zu einem Zeitpunkt T_0 eine Befüllung auf, zu der sich der Kolben 8 zwischen seinen beiden Endlagen befindet und noch nicht von der Halteeinrichtung 12 entgegen dem von der Federeinrichtung 11 bewirkten Rückstellbestreben in Richtung seiner ersten Endlage gehalten ist.

Dies resultiert aus der Tatsache, dass der Druck p_V der Druckversorgung des Hydrauliksystems 19 kleiner als ein Schwellwert P_schwell ist. Dabei entspricht der Druckwert P_schwell einem Druckwert, der zum Überwinden des Rückstellbestrebens der Hydraulikspeichereinrichtung ausgehend von einem Betriebszustand, der von dem zu dem Minimum des Volumens des Speicherraumes 9 äquivalenten Betriebszustand verschieden ist, in Richtung des zu dem Minimum des Volumens des Speicherraumes 9 äquivalenten Betriebszustandes erforderlich ist und den Kolben 8 in seine zweite Endlage, in der der Kolben 8 entgegen der Federkraft der Federeinrichtung 11 von der Halteeinrichtung 12 gehalten wird, verschiebt. Der Speicherraum 9 wird bei Anliegen eines Drucks der Druckversorgung des Hydrauliksystems 19, der wenigstens dem Druckwert P_schwel entspricht, über einen vordefinierten Zeitraum befüllt, so dass der Kolben 8 sicher von seiner ersten Endstellung in seine zweite Endstellung, in der der Kolben 8 von der Halteeinrichtung 12 gehalten wird, verschoben wird.

Um den Kolben 8 bei Vorliegen eines Drucks der Druckversorgung des Hydrauliksystems 19 sicher in seine zweite Endlage zu verschieben, wird der Druck p_V der Druckversorgung in der in Fig. 3 dargestellten Art und Weise zu einem Zeitpunkt T_1 bis zu einem Zeitpunkt T_2 auf einen Druckwert P_füll angehoben und vorliegend konstant auf diesen Druckwert belassen. Die Druckanhebung des Drucks p_Vder Druckversorgung des Hydrauliksystems 19 bewirkt einen Anstieg des Drucks p_9 im Speicherraum 9 und eine damit einhergehende Verschiebung des Kolbens 8 in Richtung seiner zweiten Endlage, wobei der Druck p_9 im Speicherraum 9 zu einem Zeitpunkt T_3 dem Schwellwert P_schwell entspricht und anschließend während eines bis zu einem Zeitpunkt T_4 andauernden Zeitraumes auf das Niveau des Druckwertes P_füll des Drucks p_V der Druckversorgung ansteigt. Dies resultiert wiederum aus der Tatsache, dass der Kolben 8 zum Zeitpunkt T_3 seine zweite Endlage erreicht hat und der Speicherraum 9 vollständig befüllt ist. Dann aktiviert der Kolben 8 die Halteeinrichtung 12 in der vorbeschriebenen Art und Weise und wird von dieser in seiner zweiten Endlage gehalten.

Aufgrund der vorbeschriebenen Vorgehensweise wird eine vollständige Befüllung der Hydraulikspeichereinrichtung 5 beziehungsweise des Speicherraumes 9 auch dann gewährleistet, wenn der Druck p_V der Druckversorgung aufgrund anderer Getriebefunktionen zunächst kleiner als der Schwellwert P_schwell ist, wobei die vorbeschriebene Druckanhebung vorzugsweise nur dann durchgeführt wird, wenn dadurch keine anderen Getriebefunktionen beeinträchtigt werden.

Des Weiteren ist die vorbeschriebene Befülldruckanhebung der Hydraulikspeichereinrichtung 5 strategiefähig ausgeführt und wird deshalb vorzugsweise während sogenannter Motorschubphasen, wie während einer Ausrollphase eines Fahrzeuges, durchgeführt. Zusätzlich unterbleibt die vorbeschriebene Druckanhebung während Schaltungen in der Getriebeeinrichtung 3 beziehungsweise während sogenannter Schnellfüllphasen von Schaltelementen der Getriebeeinrichtung, womit auf einfache Art und Weise sichergestellt ist, dass eine für die Befüllung der Hydraulikspeichereinrichtung 5 erforderliches Hydraulikfluidvolumen während der Befüllung des Speicherraumes 9 zur Verfügung steht.

Des Weiteren kann z. B. eine Druckanhebung auch in Position N oder P durchgeführt werden, um unmittelbar nach Motorneustart den Speicher schnellstmöglich zu befüllen und somit für nachfolgenden Start/Stopp betriebsbereit zu machen.

Um unnötige Druckanhebungen und somit gegebenenfalls eine Kraftstoffverbrauchserhöhung des mit der Getriebeeinrichtung 3 und der Hydraulikspeichereinrichtung 5 ausgebildeten Fahrzeuges 1 zu vermeiden beziehungsweise zu minimieren, wird die Druckanhebung des Drucks p_V der Druckversorgung des Hydrauliksystems 19, die eine Rastierung des Kolbens 8 bewirkt, nur während der aktivierten Motor-Start-Stopp-Funktion und vorzugsweise nur bei Vorliegen einer Anforderung zum Abschalten der Brennkraftmaschine 2 durchgeführt. Dabei wird der Druck p_V der Druckversorgung des Hydrauliksystems 19 vorliegend bei einer start-stopp-funktionsseitigen Anforderung zum Abschalten der Brennkraftmaschine derart variiert, dass die Hydraulikspeichereinrichtung 5 spätestens zum Abschaltzeitpunkt der Brennkraftmaschine 2 von der Halteeinrichtung 12 in dem wenigstens annähernd zu dem Maximum des Volumens des Speicherraumes 9 äquivalenten Betriebszustand gehalten wird.

Um im Fehlerfall der Hydraulikspeichereinrichtung 5, während der der Kolben 8 nicht von der Halteeinrichtung 12 in seiner zweiten Endlage haltbar ist, die Druckanhebung des Drucks p_V der Druckversorgung nicht über einen unerwünscht fangen Zeitraum durchzuführen, wird der Druck lediglich während eines vordefinierten Zeitraumes angehoben, wobei der vordefinierte Zeitraum in Abhängigkeit von aktuellen Betriebszustandsparametem der Bauteile des Antriebsstranges des Fahrzeuges adaptierbar ist.

Schließlich ist die Druckanhebephase bei Ermittlung der zweiten Endlage des Kolbens 8 und/oder dem Erkennen der Aktivierung der Halteeinrichtung 12 beendbar, wobei die Lageerkennung des Kolbens 8 über eine Zusatzsensorik der Hydraulikspeichereinrichtung 5 durchführbar ist.

Alternativ zu der Bestimmung des Befüllgrades des Speicherraumes 9 mittels der Zusatzsensorik der Hydraulikspeichereinrichtung 5 ist dieser auch über ein Befüllmodell ermittelbar, weiches anhand des anliegenden Drucks p_Vder Druckversorgung des Hydrauliksystems 19 und einer Befüllzeit den Befüllgrad theoretisch bestimmt und bei der Ermittlung eines vollständig befüllten Speicherraumes 9 die Druckanhebung beendet. Dabei kann der Druck p_V beispielsweise mittels eines Drucksensors gemessen werden, kann aber auch über den Aktuatorstrom desjenigen elektrohydraulischen Druckregelentils, welches den Druck p_V einstellt, bestimmt werden.

Zusätzlich ist der vordefinierte Zeitraum in Abhängigkeit einer Mitbewertung beziehungsweise einer Berücksichtigung von durch andere Getriebefunktionalitäten bewirkten Druckanhebungen des Drucks p_V der Druckversorgung des Hydrauliksystems 19, wie beispielsweise durch eine lastabhängige Druckveränderung oder eine durch eine Schaltelementbefüllung bewirkte Druckveränderung, adaptierbar. Damit ist der vordefinierte Zeitraum für die Druckanhebung des Drucks p_V der Druckversorgung zur Speicherbefüllung verkürzbar, wenn durch andere Getriebefunktionalitäten bereits eine Druckanhebung des Drucks der Druckversorgung erfolgte. Das bedeutet, dass der vordefinierte Zeitraum bei entsprechenden Betriebszustandsverläufen des Hydrauliksystems 19 unter Umständen auf Null gesetzt wird wenn der Speicherraum 9 beispielsweise aufgrund einer lastabhängigen Anhebung des Drucks der Druckversorgung vollständig befüllt ist.

Somit besteht auf einfache Art und Weise die Möglichkeit, eine zum vollständigen Befüllen des Speicherraumes 9 der Hydraufikspeichereinrichtung 5 vorgesehene Druckanhebung des Drucks p_V der Druckversorgung flexibel an eine aus anderen Getriebefunktionalitäten resultierende Druckanhebung anzuschließen, wobei die Druckanhebung zum Führen der Hydraulikspeichereinrichtung 5 in einen zu dem Maximum des Volumens des Speicherraumes 9 äquivalenten Betriebszustand primär während des adaptiertbaren vordefinierten Zeitraumes durchgeführt wird.

Nach der Druckanhebung des Drucks p_V der Druckversorgung des Hydrauliksystems 19 wird der Druck p_V der Druckversorgung wieder auf einen in Abhängigkeit eines aktuellen Betriebszustandes der Getriebeeinrichtung stehenden Druckwert eingestellt, um die mit dem Druck der Druckversorgung einzustellenden Getriebefunktionalitäten in gewünschtem Umfang zur Verfügung zu stellen.

Abweichend von der vorbeschriebenen Vorgehensweise besteht jedoch auch die Möglichkeit, einen Druck der Druckversorgung des Hydrauliksystems 19 ausgehend von einem Druckniveau, weiches erheblich über dem Schwellwert P_schwell liegt, in Richtung des Schwellwertes P_schwell abzusenken, um den Speicherraum 9 vollständig zu befüllen und den Kolben über die Halteeinrichtung 12 zu arretieren, bevor der Druck der Druckversorgung von einem Getriebesteuergerät anforderungsgemäß auf einen Druckwert kleiner als der Schwellwert P_schwell abgesenkt wird. Dabei ist jedoch zu berücksichtigen, dass durch diese Vorgehensweise andere Getriebefunktionalitäten nicht oder nur in geringem Umfang beeinflusst werden.

### Bezugszeichen

- 1: Fahrzeug
- 2: Verbrennungsmaschine
- 3: Getriebeeinrichtung
- 4: Ölsumpf
- 5: Hydraulikspeichereinrichtung
- 6: hydraulisches Schaltgerät
- 7: Zylinder
- 7A: Gehäuseteil
- 8: Kolben
- 8A: Führungsbereich
- 8B: Kolbenbereich
- 8C: Bolzenelement
- 8D: Kegefstumpfbereich
- 8E: Kolbenabschnitt
- 9: Speicherraum
- 10: Raum
- 11: Federeinrichtung
- 11A: Federelement
- 12: Halteeinrichtung
- 12A, 12B: Rastelemente
- 12A1, 12B1: Führungsschrägen
- 12A2, 12B2: weitere Führungsschrägen
- 13: Rastmechanismus
- 14A, 14B: Drehpunkt
- 15: elektromagnetischer Aktor
- 16: Betätigungsstößel
- 16A: Kopfbereich des Betätigungsstößels
- 17: weitere Federeinrichtung
- 18: Anschlagbereich
- 19: Hydrauliksystem
- 19A: Rotationsachse
- 20: Getriebepumpe
- 21: Rückschlagventil
- 22: Bypassleitung
- 23: Drosseleinrichtung
- 25: Schaltelement
- 26: Schaltelement

- P_füll: Fülldruck
- P_schwell: Schwellwert
- p_V: Druck der Druckversorgung
- p_9: Druck des Speicherraumes
- T_0: diskreter Zeitpunkt
- T_1: diskreter Zeitpunkt
- T_2: diskreter Zeitpunkt
- T_3: diskreter Zeitpunkt
- T_4: diskreter Zeitpunkt
- t: Zeit

## Patentansprüche

1. Verfahren zum Betätigen einer Hydraulikspeichereinrichtung (5) einer Getriebeeinrichtung (3) mit einem Speicherraum (9), dessen Volumen zwischen einem Minimum und einem Maximum variierbar ist, wobei das Volumen des Speicherraumes (9) von seinem Minimum in sein Maximum durch beaufschlagen des Speicheraumes (9) mit unter Druck stehendem Hydraulikfluid einer Druckversorgung (20) der Getriebeeinrichtung (3) überführbar ist, wobei der Druck zum Überwinden eines Rückstellbestrebens der Hydraulikspeichereinrichtung (5) ausgehend von einem Betriebszustand, der von dem zu dem Minimum des Volumens des Speicherraumes (9) äquivalenten Betriebszustand verschieden ist, in Richtung eines zu dem Minimum des Volumens des Speicherraumes (9) äquivalenten Betriebszustandes auf einen Schwellwert (P_schwell) einzustellen ist und eine Halteeinrichtung (12) zum Halten der Hydraulikspeichereinrichtung (5) wenigstens in dem zu dem Maximum des Volumens des Speicherraumes (9) äquivalenten Betriebszustandes entgegen dem Rückstellbestreben vorgesehen ist,
wobei der Speicherraum (9) beim Befüllen der Hydraulikspeichereinrichtung (5) von der Druckversorgung (20) her solange zumindest mit einem dem Schwellwert (P_schwell) entsprechenden Druckwert beaufschlagt wird, bis die Hydraulikspeichereinrichtung (5) den Betriebszustand erreicht hat, in der sie von der Halteeinrichtung (12) haltbar ist,
**dadurch gekennzeichnet,**
**dass** der Druck (p_V) der Druckversorgung (20) ausgehend von einem aktuellen Druckniveau strategiefähig anhebbar oder absenkbar ist, sodass zum Befüllen der Hydraulikspeichereinrichtung (5) ein Druckpotential zur Verfügung steht, mittels welchem die Hydraulikspeichereinrichtung (5) in den Betriebszustand überführbar ist, in dem sie von der Halteeinrichtung (12) haltbar ist, wobei eine derartige Veränderung des Drucks (p_V) der Druckversorgung (20)
• während eines Schubbetriebes eines mit der Getriebeeinrichtung (3) ausgebildeten Antriebsstranges eines Fahrzeuges (1) durchgeführt wird,
• bei einer aktivierten Motor-Start-Stopp-Funktion zum automatischen Zu- und Abschalten einer Brennkraftmaschine (2) durchgeführt wird,
• während eines Schaltvorganges in der Getriebeeinrichtung (3) unterbleibt, und
• während einer Schnellfüllphase eines Schaltelementes (15, 26) der Getriebeeinrichtung (3) unterbleibt.

2. Verfahren nach Anspruch 1, **dadurch gekennzeichnet, dass** der Druck (p_V) der Druckversorgung (20) bei einer motor-start-stoppfunktionsseitigen Anforderung zum Abschalten der Brennkraftmaschine (2) derart variiert wird, dass die Hydraulikspeichereinrichtung (5) spätestens zum Abschaltzeitpunkt der Brennkraftmaschine (2) von der Halteeinrichtung (12) in dem wenigstens annähernd zu dem Maximum des Volumens des Speicherraumes (9) äquivalenten Betriebszustand gehalten wird.

3. Verfahren nach Anspruch 1 oder 2, **dadurch gekennzeichnet, dass** die Veränderung des Druckes (p_V) der Druckversorgung (20) nach Ablauf eines vordefinierten Zeitraumes ausgehend vom Beginn der Veränderung auf einen in Abhängigkeit eines aktuellen Betriebszustandes der Getriebeeinrichtung (3) stehenden Druckwert eingestellt wird.

4. Verfahren nach Anspruch 3, **dadurch gekennzeichnet, dass** der vordefinierte Zeitraum in Abhängigkeit wenigstens eines Betriebszustandparameters eines Bauteiles des Antriebsstranges des Fahrzeuges (1) adaptiert wird.

5. Verfahren nach Anspruch 3 oder 4, **dadurch gekennzeichnet, dass** der vordefinierte Zeitraum mittels eines einen Befüllgrad des Speicherraumes (9) abbildenden Befüllmodells bestimmt wird.

6. Verfahren nach Ansprüche 3, 4 oder 5, **dadurch gekennzeichnet, dass** der vordefinierte Zeitraum in Abhängigkeit von durch wenigstens eine Getriebefunktion bewirkte Veränderung des Druckes (p_V) der Druckversorgung (20) adaptierbar ist.

7. Verfahren nach einem der Ansprüche 1 bis 6, **dadurch gekennzeichnet, dass** der Druck (p_V) der Druckversorgung (20) bei einem Übergang der Halteeinrichtung (12) aus einem die Hydraulikspeichereinrichtung (5) freigebenden Zustand in einen die Hydraulikspeichereinrichtung (5) haltenden Zustand auf einen in Abhängigkeit eines aktuellen Betriebszustandes stehenden Druckwert eingestellt wird.

## Claims

1. Method for actuating a hydraulic accumulator device (5) of a gear arrangement (3), with an accumulator space (9), the volume of which is variable between a minimum and a maximum, the volume of the accumulator space (9) being transferable from its minimum to its maximum by the action of pressurized hydraulic fluid from a pressure supply (20) of the gear arrangement (3) upon the accumulator space (9), and, in order to overcome the urge of the hydraulic accumulator device (5) to return, the pressure having to be set from an operating state, which is different from the operating state equivalent to the minimum of the volume of the accumulator space (9), in the direction of an operating state equivalent to the minimum of the volume of the accumulator space (9), to a threshold value (P_thresh), and a holding device (12) being provided for holding the hydraulic accumulator device (5) at least in the operating state equivalent to the maximum of the volume of the accumulator space (9), contrary to the urge to return, during the filling of the hydraulic accumulator device (5) by the pressure supply (20) the accumulator space (9) being acted upon at least with a pressure value corresponding to the threshold value (P_thresh), until the hydraulic accumulator device (5) has reached the operating state in which it can be held by the holding device (12), **characterized in that** the pressure (p_V) of the pressure supply (20) can be raised or lowered strategically from a current pressure level, so that, for filling the hydraulic accumulator device (5), a pressure potential is available, by means of which the hydraulic accumulator device (5) can be transferred into the operating state in which it can be held by the holding device (12), such a variation in the pressure (p_V) of the pressure supply (20)
• being carried out during an overrun of a drive train, formed with the gear arrangement (3), of a vehicle (1),
• being carried out in the case of an activated engine start/stop function for automatically switching an internal combustion engine (2) on and off,
• being discontinued during a shift action in the gear arrangement (3), and
• being discontinued during a rapid filling phase of a switch element (15, 26) of the gear arrangement (3).

2. Method according to Claim 1, **characterized in that**, in the case of an engine start/stop function requirement for switching off the internal combustion engine (2), the pressure (p_V) of the pressure supply (20) is varied in such a way that the hydraulic accumulator device (5) is held by the holding device (12), at the latest at the switch-off time point of the internal combustion engine (2), in the operating state at least approximately equivalent to the maximum of the volume of the accumulator space (9).

3. Method according to Claim 1 or 2, **characterized in that** the variation in the pressure (p_V) of the pressure supply (20) is set, after the expiry of a predefined period of time from the commencement of the variation, to a pressure value which is dependent on a current operating state of the gear arrangement (3).

4. Method according to Claim 3, **characterized in that** the predefined period of time is adapted in dependence on at least one operating state parameter of a component of the drive train of the vehicle (1).

5. Method according to Claim 3 or 4, **characterized in that** the predefined period of time is determined by means of a filling model mapping a degree of filling of the accumulator space (9).

6. Method according to Claim 3, 4 or 5, **characterized in that** the predefined period of time is adaptable in dependence on a variation in the pressure (p_V) of the pressure supply (20) which is brought about by at least one gear function.

7. Method according to one of Claims 1 to 6, **characterized in that**, in the case of a transition of the holding device (12) from the state releasing the hydraulic accumulator device (5) into a state holding the hydraulic accumulator device (5), the pressure (p_V) of the pressure supply (20) is set to a pressure value which is dependent on a current operating state.

## Revendications

1. Procédé d'actionnement d'un dispositif de stockage hydraulique (5) d'un dispositif de transmission (3) comprenant un espace de stockage (9), dont le volume peut varier entre un minimum et un maximum, le volume de l'espace de stockage (9) pouvant être transféré de son minimum à son maximum par sollicitation de l'espace de stockage (9) par du fluide hydraulique sous pression d'une alimentation en pression (20) du dispositif de transmission (3), la pression pour surmonter une tendance au rappel du dispositif de stockage hydraulique (5) pouvant être ajustée d'un état de fonctionnement qui est différent de l'état de fonctionnement équivalent au minimum du volume de l'espace de stockage (9) dans le sens d'un état de fonctionnement équivalent au minimum du volume de l'espace de stockage (9) à une valeur seuil (P_seuil) et un dispositif de maintien (12) étant prévu pour maintenir le dispositif de stockage hydraulique (5) au moins dans l'état de fonctionnement équivalent au maximum du volume de l'espace de stockage (9) à l'encontre de la tendance au rappel,
l'espace de stockage (9), lors du remplissage du dispositif de stockage hydraulique (5) à partir de l'alimentation en pression (20), étant sollicité au moins avec une valeur de pression correspondant à la valeur seuil (P_seuil) tant que le dispositif de stockage hydraulique (5) n'a pas atteint l'état de fonctionnement dans lequel il peut être maintenu par le dispositif de maintien (12), **caractérisé en ce que**
la pression (p_V) de l'alimentation en pression (20) peut être augmentée ou abaissée à partir d'un niveau de pression actuel de manière stratégique, de sorte que pour le remplissage du dispositif de stockage hydraulique (5), un potentiel de pression soit disponible, au moyen duquel le dispositif de stockage hydraulique (5) peut être transféré dans l'état de fonctionnement dans lequel il peut être maintenu par le dispositif de maintien (12),
une telle variation de la pression (p_V) de l'alimentation en pression (20)
- étant effectuée pendant un mode de fonctionnement de poussée d'une chaîne cinématique d'un véhicule (1) réalisée avec le dispositif de transmission (3),
- étant mise en oeuvre lorsqu'une fonction Marche-Arrêt du moteur est activée pour mettre en marche et couper automatiquement un moteur à combustion interne (2),
- étant supprimée pendant une opération de changement de vitesse dans le dispositif de transmission (3), et
- étant supprimée pendant une phase de remplissage rapide d'un élément de commutation (15, 26) du dispositif de transmission (3).

2. Procédé selon la revendication 1, **caractérisé en ce que** la pression (p_V) de l'alimentation en pression (20), dans le cas d'une demande provenant de la fonction marche-arrêt du moteur de couper le moteur à combustion interne (2), est variée de telle sorte que le dispositif de stockage hydraulique (5) soit maintenu au plus tard à l'instant de la coupure du moteur à combustion interne (2) par le dispositif de maintien (12) dans l'état de fonctionnement équivalent au moins approximativement au maximum du volume de l'espace de stockage (9).

3. Procédé selon la revendication 1 ou 2, **caractérisé en ce que** la variation de la pression (p_V) de l'alimentation en pression (20) est ajustée après l'écoulement d'une durée prédéfinie à partir du début de la variation à une valeur de pression dépendant d'un état de fonctionnement actuel du dispositif de transmission (3).

4. Procédé selon la revendication 3, **caractérisé en ce que** la durée prédéfinie est adaptée en fonction d'au moins un paramètre d'état de fonctionnement d'un composant de la chaîne cinématique du véhicule (1).

5. Procédé selon la revendication 3 ou 4, **caractérisé en ce que** la durée prédéfinie est déterminée au moyen d'un modèle de remplissage reproduisant un degré de remplissage de l'espace de stockage (9).

6. Procédé selon la revendication 3, 4 ou 5, **caractérisé en ce que** la durée prédéfinie peut être adaptée en fonction d'une variation de la pression (p_V) de l'alimentation en pression (20) provoquée par au moins une fonction de transmission.

7. Procédé selon l'une quelconque des revendications 1 à 6, **caractérisé en ce que** la pression (p_V) de l'alimentation en pression (20), dans le cas d'un transfert du dispositif de maintien (12) d'un état libérant le dispositif de stockage hydraulique (5) dans un état retenant le dispositif de stockage hydraulique (5), est ajustée à une valeur de pression en fonction d'un état de fonctionnement actuel.
